(19) Europäisches Patentamt
European Patent Office
Office européen des brevets

(11) **EP 3 124 819 B1**

(12) **FASCICULE DE BREVET EUROPEEN**

(45) Date de publication et mention de la délivrance du brevet:
**17.03.2021 Bulletin 2021/11**

(51) Int Cl.:
*F16D 65/00* *(2006.01)*    *F16F 15/00* *(2006.01)*
*G01H 1/00* *(2006.01)*

(21) Numéro de dépôt: **16176329.7**

(22) Date de dépôt: **27.06.2016**

(54) **PROCEDE D'OPTIMISATION D'UN SYSTEME DE FREIN POUR REDUIRE LE BRUIT DE CRISSEMENT**

OPTIMIERUNGSVERFAHREN EINES BREMSSYSTEMS ZUR REDUZIERUNG DES QUIETSCHGERÄUSCHES

METHOD FOR OPTIMISING A BRAKE SYSTEM IN ORDER TO REDUCE THE CRUNCHING NOISE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.07.2015 FR 1557415**

(43) Date de publication de la demande:
**01.02.2017 Bulletin 2017/05**

(73) Titulaires:
• **PSA Automobiles SA**
  **78300 Poissy (FR)**
• **CENTRE NATIONAL DE LA RECHERCHE SCIENTIFIQUE**
  **75794 Paris Cedex 16 (FR)**
• **Ecole Centrale de Lyon**
  **69134 Ecully Cedex (FR)**
• **Ecole Nationale d'Ingénieurs de Saint-Etienne**
  **43023 Saint-Etienne Cedex 2 (FR)**

(72) Inventeurs:
• **NACIVET, Samuel**
  **75018 Paris (FR)**
• **SINOU, Jean-Jacques**
  **69008 Lyon (FR)**

(56) Documents cités:
WO-A2-01/15948    FR-A1- 2 936 762
FR-B1- 2 942 035    JP-A- H0 341 232
JP-A- 2000 283 193    US-B1- 6 186 289

• O. FAZIO ET AL: "Reduction strategy for a brake system with local frictional non-linearities - Application for the prediction of unstable vibration modes", APPLIED ACOUSTICS., vol. 91, 13 décembre 2014 (2014-12-13), pages 12-24, XP055281058, GB ISSN: 0003-682X, DOI: 10.1016/j.apacoust.2014.11.005

**Description**

Contexte technique

L'invention s'inscrit dans le domaine de l'évaluation numérique des instabilités de crissement de frein, pour la mise au point, l'optimisation et le développement de systèmes de frein, notamment pour les véhicules automobiles. Les freins envisagés sont notamment des freins à disques et plaquettes de freinage.

On connaît une méthode d'évaluation numérique dite classique basée sur l'étude de la stabilité à l'état d'équilibre statique. Cette méthode est basée sur une analyse modale complexe. La matrice de raideur linéarisée avant de réaliser l'analyse modale complexe est dissymétrique du fait des phénomènes de frottement. Les fréquences propres complexes mises en évidence par l'analyse modale comportent des parties réelles positives représentatives de modes instables autour de l'état d'équilibre statique.

Cette méthode classique présente malheureusement le défaut que l'on ne peut, en l'utilisant, obtenir des informations qu'autour d'un état d'équilibre statique initial, ce qui ne permet pas de hiérarchiser des instabilités.

On connait également des méthodes d'équilibre harmonique sous contraintes, mais celles-ci présentent des difficultés en termes de convergence des calculs du fait des impacts entre disque et plaquettes.

L'article de O. FAZIO *et al.*, dont les co-auteurs sont les inventeurs de l'invention objet de la présente demande de brevet et intitulé *"Reduction strategy for a brake system with local frictional non-linearities - Application for the prediction of unstable vibration modes"*, paru dans Applied Acoustics, éditions ELSEVIER Ltd., vol. 91, 13 décembre 2014, pages 12 à 24, XP055281058, GB, ISSN: 0003-682X, DOI : 10.2016/j.apacoust.2014.11.005, décrit une stratégie de réduction pour un système de frein présentant des non-linéarités locales de frottement, applicable à la prédiction de modes instables de vibration.

Le document de brevet FR-B1-2 942 035 divulgue une méthode non linéaire appliquée au crissement de frein.

Définition de l'invention

Pour résoudre les problèmes évoqués, il est alors proposé un procédé d'optimisation d'un système de frein pour réduire le bruit de crissement, comprenant au moins les étapes de

- passer en revue des valeurs possibles d'au moins un paramètre physique du système
- pour chaque valeur du paramètre passée en revue et pour un point prédéterminé d'équilibre statique non linéaire du système de frein, rechercher et identifier par ordinateur les différents modes propres du système de frein correspondant à des instabilités du système de frein,
- pour chaque mode propre identifié, imposer au cours d'un balayage par ordinateur différentes amplitudes vibratoires pour les vibrations dans ledit mode, et pour chaque amplitude imposée au cours du balayage, effectuer par ordinateur une décomposition du système de frein en harmoniques en ayant linéarisé les forces de contact vis-à-vis du déplacement et de la vitesse pour repérer des modes propres instables du système de frein,
- choisir une des valeurs du paramètre physique ainsi passées en revue en fonction des modes propres instables ainsi repérés pour réduire le bruit de crissement du système de frein.

Grâce à ce procédé, il est possible de repérer des facteurs de génération de crissement efficacement, sans un temps de calcul particulièrement long. Cela permet de réduire le temps de prise de décision dans un processus de développement d'un produit industriel, tel qu'un frein automobile, et d'obtenir des produits moins générateurs de bruits de crissement.

Selon une caractéristique avantageuse, le paramètre physique est la valeur d'une masse d'une pièce du système ou la présence de ladite pièce, tout ou partie de la géométrie de l'interface de frottement, ou encore un coefficient de frottement.

Selon une caractéristique avantageuse, le système est modélisé en éléments finis et les forces de contact sont linéarisées indépendamment pour chaque élément de contact.

Selon une caractéristique avantageuse, on calcule par ordinateur les valeurs propres complexes des différents modes propres complexes du système de frein correspondant à des instabilités sur un modèle linéarisé du système de frein dans lequel chaque élément de contact est linéarisé indépendamment.

Selon une caractéristique avantageuse, l'analyse harmonique est l'analyse harmonique de Fourier.

Selon une caractéristique avantageuse, pour repérer des modes propres instables du système de frein, on approche le système par son harmonique de rang 1.

Selon une caractéristique avantageuse, pour repérer des modes propres complexes instables du système de frein dans un espace d'état, on prend pour hypothèse que la déformée de l'harmonique de rang 1 et la pulsation finale des cycles limites non linéaires sont indépendants de l'amplitude modale considérée.

Alternativement, pour repérer des modes propres complexes instables du système de frein dans un espace d'état, on fait varier la déformée de l'harmonique de rang 1 et la pulsation finale des cycles limites non linéaires en fonction de de l'amplitude modale considérée en se basant sur la méthode d'équilibre harmonique contraint généralisé.

Liste des figures

L'invention va maintenant être décrite en détails en relation aux figures

- la figure 1 présente un modèle de frein pouvant faire l'objet de l'invention

- la figure 2 présente un procédé selon un mode de réalisation de l'invention.

Description détaillée

Bien que le problème des vibrations induites par la friction ait été l'objet de nombreuses études ces dernières décennies en ce qui concerne divers aspects et développements spécifiques (formulation non linéaire et comportement aux interfaces de friction, émission acoustique, impact significatif de la topographie de surface de contact et du modèle de contact frictionnel, introduction d'incertitude pour la prédiction du crissement, effet de l'amortissement sur la proportion aux crissements), il est toujours difficile de prédire l'apparition d'un bruit de crissement suffisamment tôt pour réduire les coûts de développement dans le processus de fabrication d'un système de freinage. Par conséquent le crissement est toujours responsable d'un nombre important de nuisances dans le domaine de l'automobile et le problème de la prédiction du bruit de crissement et de la compréhension des mécanismes à son origine sont actuellement un enjeu pour les industriels de l'automobile.

En général la stratégie numérique pour prédire le bruit de crissement peut être décomposée en deux parties principales. La première partie principale concerne l'analyse de stabilité autour des points d'équilibre de glissement statiques non linéaires. Le déplacement de chaque degré de liberté du système est exprimé sous la forme d'un nombre complexe. L'analyse en valeur propre complexe classique (CEA) est effectuée sur le système linéarisé de manière à prédire la propension au crissement du frein dans une gamme de fréquences donnée. Cette propension est déterminée par l'observation d'instabilités qui contribuent plus ou moins fortement au bruit de crissement.

Même si cette première étape est utilisée couramment dans l'industrie, elle permet seulement de prédire le début d'une instabilité autour d'un point d'équilibre donné pour un système non linéaire. De manière à éviter une sous-estimation ou une surestimation des modes instables qui peut être observée dans une simulation non linéaire, une approche non linéaire complète doit être effectuée. Le calcul des vibrations transitoires et non linéaires est effectué essentiellement par intégration numérique. Dans un contexte industriel cette stratégie numérique peut devenir très coûteuse en calcul de telle sorte qu'elle est considérée comme impraticable.

Sur cette base, des méthodes alternatives pour estimer des solutions approximées en régime stationnaire de systèmes autonomes non linéaires faisant l'objet d'instabilités multiples ont été proposées et développées par certains auteurs dans le contexte du bruit de crissement automobile. Cette stratégie permet la prédiction à la fois des solutions périodiques et des solutions quasi périodiques ainsi que des fréquences instables associées. Cette méthode nécessite encore beaucoup de développements notamment en ce qui concerne son utilisation industrielle sur des modèles en éléments finis.

Nous proposons une alternative à cette approche de manière à offrir une estimation simplifiée des occurrences de crissement dans des systèmes de frein en estimant non seulement la stabilité du point d'équilibre non linéaire mais également l'apparition de fréquences instables causées par la génération du bruit de crissement. Cette nouvelle stratégie est basée sur une approximation de l'évolution des parties réelles de valeurs propres complexes quand les amplitudes des vibrations non linéaires initiales augmentent.

Tout d'abord le système de frein faisant l'objet de l'étude, les équations linéaires générales du modèle numérique et l'analyse de stabilité classique (basée sur une analyse en valeurs propres complexes) du système de frein complet sont présentés. Ensuite, l'analyse de stabilité par amplitude modale (MASA) est définie en utilisant les équations de premier harmonique de la méthode d'équilibre harmonique (HBM) et une nouvelle linéarisation des forces non linéaires. Finalement nous présentons des résultats.

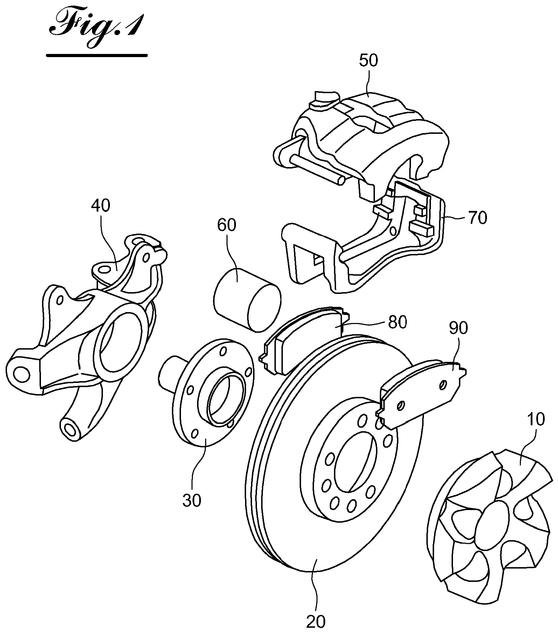

Dans cette étude, nous envisageons un modèle en éléments finis d'un système de frein automobile industriel. Ce système de frein est présenté en **figure 1.** Ce système est par exemple composé d'une roue 10, d'un disque 20, d'un moyeu 30, d'une articulation 40, d'un étrier 50, d'un piston 60, d'un support 70, d'une plaquette interne 80 et d'une plaquette externe 90. Les tampons 80 et 90 appuient sur le disque 20, en fonction de l'intensité de la commande.

La méthode numérique utilisée ici a été expliquée en détail précédemment dans Fazio et al Applied Acoustics, volume 91, 15 avril 2015, pages 12 à 24. Dans cette étude préalable, un processus numérique basé sur une réduction modale pour minimiser la taille du modèle grâce à une modélisation non-linéaire spécifique à l'interface de friction a été décrite de manière à prédire correctement à la fois l'équilibre statique non-linéaire et l'analyse de la stabilité d'un modèle en éléments finis de grande taille.

L'équation non-linéaire générale du système de frein peut être écrite de la manière suivante

$$\mathbf{M\ddot{U}} + \mathbf{C\dot{U}} + \mathbf{K}_{nl}\mathbf{U} + \mathbf{F}_{nl}\left(\mathbf{U}\right) = \mathbf{F}_{ext} \qquad (1)$$

où M et C sont les matrices de masse et d'amortissement respectivement. U est le champ de déplacement. $\mathbf{K}_{nl}$ est la matrice de rigidité causée par les composants structurels et les trois interfaces de contact entre le piston et la plaquette, la plaquette et le support et la plaquette et l'étrier (avec la possibilité de contact ou de perte de contact à chaque interface). $\mathbf{F}_{nl}$ est lié aux forces non-linéaires apparaissant à l'interface entre disque et plaquette. $\mathbf{F}_{ext}$ définit les forces de pression du piston (c'est-à-dire un vecteur des forces externes) qui agissent sur les plaquettes entrant en contact avec le disque. Cela correspond à une action par le conducteur sur la pédale de frein. En pratique, le système de frein est chargé de la manière suivante : une force nodale est distribuée uniformément sur la surface de piston et son opposée est distribuée sur l'étrier de la même manière. Comme expliqué précédemment dans l'article *Fazio et al,* les non-linéarités aux interfaces de friction sont à la fois les termes non-linéaires cubiques et la potentielle perte de contact entre les surfaces du disque et les surfaces de plaquette. Un champ de vitesse correspondant à la rotation du disque est imposé sur la surface du disque. De cette manière les forces de frictions sont déduites des forces de contact normales en utilisant la loi de Coulomb classique. Un état de glissement permanent est envisagé et on fait l'hypothèse d'un coefficient de friction constant.

Nous allons maintenant aborder l'analyse de stabilité à l'équilibre statique non linéaire.

L'analyse de stabilité est une méthode classique pour prédire le bruit de crissement et est la première étape pour étudier les systèmes non-linéaires sujets à de phénomènes d'instabilité. Généralement elle est effectuée pour les systèmes généralisés au voisinage de l'équilibre statique non-linéaire par l'analyse de valeurs propres complexes (CEA). Du fait des forces de friction, le problème n'est pas symétrique ce qui peut mener à l'apparition d'instabilités. Le présent paragraphe explique brièvement les différentes étapes de l'analyse de stabilité pour un système de frein faisant l'objet de l'étude.

Tout d'abord le point $\mathbf{U_s}$ d'équilibre statique non-linéaire de l'équation non-linéaire du système de frein doit être calculé. $\mathbf{U_s}$ est obtenu en résolvant l'équation suivante :

$$\mathbf{K}_{nl,U_s}\mathbf{U}_s + \mathbf{F}_{nl}\left(\mathbf{U}_s\right) = \mathbf{F}_{ext} \qquad (2)$$

dans laquelle $\mathbf{K}_{nl,Us}$ correspond à la matrice d'origine linéarisée au voisinage de l'équilibre statique non-linéaire. Comme expliqué précédemment, dans l'article *Fazio et al* tous les contacts sauf pour l'interface entre disque et plaquette sont linéarisés sous forme de valeurs constantes dans la matrice de rigidité $\mathbf{K}_{nl,\ Us}$.

Ensuite, la stabilité locale est étudiée en introduisant la perturbation ΔU autour de l'équilibre statique non-linéaire précédent :

$$\mathbf{K}_{nl,U_s}(\mathbf{U}_s + \Delta\mathbf{U}) + \mathbf{F}_{nl}(\mathbf{U}_s + \Delta\mathbf{U}) = \mathbf{F}_{ext} \qquad (3)$$

En substituant les équations 2 et 3 dans l'équation générale non-linéaire du mouvement 1 (c'est-à-dire l'équation du mouvement autour de l'état d'équilibre $\mathbf{U_s}$) nous avons

$$\mathbf{M}\Delta\mathbf{\ddot{U}} + \mathbf{C}\Delta\mathbf{\dot{U}} + \mathbf{K}_{nl,U_s}\Delta\mathbf{U} + \mathbf{F}_{nl}(\mathbf{U}_s + \Delta\mathbf{U}) - \mathbf{F}_{nl}(\mathbf{U}_s) = 0 \qquad (4)$$

dans lequel $\mathbf{K}_{nl,\ Us}$ définit la matrice de rigidité linéarisée au voisinage de l'équilibre statique $\mathbf{U_s}$.

Si nous considérons l'équilibre statique exact (c'est-à-dire ΔU est égal à 0) nous devons satisfaire la relation suivante

$$\mathbf{F}_{nl}(\mathbf{U}_s + \Delta\mathbf{U}) = \mathbf{F}_{nl}(\mathbf{U}_s). \qquad (5)$$

Comme proposé par *Fazio et al,* la loi non-linéaire utilisée dans Matlab (marque déposée) est réglée suivant des résultats du logiciel Abaqus (marque déposée) (force de contact et écarts) pour chaque élément de contact indépendamment :

$$Fc_i = \begin{cases} k_l\delta_i + k_{nl}\delta_i^3 & \text{if } \delta_i > 0 \\ 0 & \text{otherwise} \end{cases} \qquad (6)$$

dans lequel $\delta_i$ représente le déplacement relatif suivant une composante normale pour l'élément de contact i. $k_l$ et $k_{nl}$ sont les rigidités pour les termes linéaires et non-linéaires à l'interface de friction entre le disque et les plaquettes. Il est important de comprendre que la procédure de réglage est dépendante du coefficient de friction $\mu$ et des efforts extérieurs parce que cela affecte l'état d'équilibre statique.

Ensuite le système est linéarisé autour de l'équilibre statique non-linéaire et le problème des valeurs propres associées est résolu en résolvant l'équation suivante :

$$(\lambda^2 \mathbf{M} + \lambda \mathbf{C} + (\mathbf{K}_{nl,\mathbf{U}_s} + \mathbf{J}_{nl}))\phi = \mathbf{0} \qquad (7)$$

dans lequel $\mathbf{J}_{nl}$ correspond à la linéarisation des forces non-linéaires de $\mathbf{F}_{nl}$ autour du point d'équilibre statique non-linéaire $\mathbf{U}_s$. Les valeurs propres complexes peuvent être écrites de la manière suivante :

$$\lambda_i = a_i + j\omega_i \qquad (8)$$

dans lequel $w_i$ représente la pulsation du mode propre associé $\varnothing_i$. Si la partie réelle $a_i$ de la valeur propre est positive, le mode propre correspondant est considéré comme instable et donc peut générer du crissement de frein. Les résultats sur l'analyse de stabilité pour le système de frein représentatif industriellement non amorti que nous étudions sont commentés ici : évolutions des six instabilités principales à 1,98kHz, 3,69kHz, 3,85 kHz, 4,72 kHz, 4,94 kHz, et 5,34 kHz, sur la gamme 0 à 6 kHz d'à la fois les parties réelles et les fréquences sont montrées en fonction du coefficient de friction $\mu$ de l'interface entre disque et plaquettes. Pour faciliter la lecture, ces résultats indiquent une des contributions principale de l'article *Fazio et al* : il est possible de réduire drastiquement le nombre de noeuds de contact aux interfaces de friction entre le disque et la plaquette tout en étant en mesure d'estimer la stabilité autour des états de contact et de l'équilibre non-linéaire statique. Dans la présente divulgation, le modèle réduit avec 104 et 212 éléments de contacts à l'interface de friction entre disque et plaquettes sont en accord avec la référence Abaqus (marque déposée) pour laquelle tous les points de contact sont conservés.

Nous allons maintenant aborder la méthodologie d'analyse de stabilité par amplitude modale (MASA).

Nous présentons ici l'approche non-linéaire pour estimer les apparitions et la génération de vibration auto-excitée en augmentation sous des amplitudes prédéfinies d'un mode instable. Tout d'abord la linéarisation nouvelle de l'approximation de premier harmonique des forces de contact utilisant les déplacements relatifs dans les éléments de contact sera introduite. Ensuite, une forme modale complexe sera définie en utilisant les déplacements de premiers harmoniques. Finalement la méthodologie d'analyse de stabilité par amplitude modale (MASA) sera présentée.

Nous présentons maintenant une représentation d'état limitée au premier harmonique en utilisant une nouvelle linéarisation des forces de contact.

Sur la base de l'équation 7, l'équation 4 peut être réécrite de la manière suivante

$$\mathbf{M}\Delta\ddot{\mathbf{U}} + \mathbf{C}\Delta\dot{\mathbf{U}} + (\mathbf{K}_{nl,\mathbf{U}_s} + \mathbf{J}_{nl})\Delta\mathbf{U} + \mathbf{\Omega} = \mathbf{0} \qquad (9)$$

dans laquelle

$$\mathbf{\Omega} = \mathbf{F}_{nl}(\mathbf{U}_s + \Delta\mathbf{U}) - \mathbf{F}_{nl}(\mathbf{U}_s) - \mathbf{J}_{nl}\Delta\mathbf{U} \qquad (10)$$

Ensuite si $\mathbf{\Omega} = 0$, le problème des valeurs propres associées correspond à l'équation 7.

Il peut être supposé que la solution non-linéaire de l'équation (9) est une série de Fourier tronquée ce qui mène à une approximation de la solution non-linéaire $\Delta U$ (t) :

$$\Delta U\left(t\right) \simeq \sum_{k=0}^{N_h} \Delta U_k\left(t\right) = \sum_{k=0}^{N_h} \Delta U_k^C \cos\left(k\omega t\right) + \sum_{k=1}^{N_h} \Delta U_k^S \sin\left(k\omega t\right) \qquad (11)$$

$\Delta U_k$ (t) est l'harmonique de rang k dans le domaine temporel avec $\Delta U_k^C$ et $\Delta U_k^S$ les vecteurs associés des coefficients de Fourier. w est la pulsation finale des cycles limite non linéaires.

Ensuite, les forces non-linéaires $\Omega$ (t) peuvent aussi être vues comme une série de Fourier tronquée :

$$\Omega\left(t\right) \simeq \sum_{k=0}^{N_h} \Omega_k\left(t\right) = \sum_{k=0}^{N_h} \Omega_k^C \cos\left(k\omega t\right) + \sum_{k=1}^{N_h} \Omega_k^S \sin\left(k\omega t\right) \qquad (12)$$

Il peut être noté que les vecteurs de coefficient de Fourier $\Omega_k^C$ et $\Omega_k^S$ peuvent être calculés en appliquant une méthode alternant les domaines fréquentiel et temporel (méthode AFT) après l'évaluation de $\Omega$ (t) dans le domaine temporel. Le lecteur est invité à se reporter à l'article Coudeyras et al Journal of Sound and Vibration (328, 4-5 : 2 : 520 540, 2009).

En rapportant les équations 11 et 12 dans l'équation 9 et en extrayant le composant de premier harmonique nous obtenons :

$$M\Delta\ddot{U}_1 + C\Delta\dot{U}_1 + \left(K_s + K_{nl}\right)\Delta U_1 + \Omega_1 \simeq 0 \qquad (13)$$

dans laquelle

$$\Delta U_1 = \Delta U_1^C \cos\left(\omega t\right) + \Delta U_1^S \sin\left(\omega t\right) \qquad (14)$$

$$\Omega_1 = \Omega_1^C \cos\left(\omega t\right) + \Omega_1^S \sin\left(\omega t\right) \qquad (15)$$

Ensuite nous proposons de linéariser $\Omega_1$ de telle sorte que :

$$\Omega_1 = K_1 \Delta U_1 + C_1 \Delta \dot{U}_1 \qquad (16)$$

Cette forme et plus spécifiquement l'amortissement hystérétique associé permet de prendre en compte la phase entre la composante de charge $\Omega_1$ et la composante de déplacement $U_1$. De plus il peut être observé que les coefficients de $K_1$ et $C_1$ peuvent être évalués pour chaque élément de contact indépendamment. Pour un élément de contact donné nous pouvons définir le déplacement relatif normal de la manière suivante :

$$\delta^n\left(t\right) = \delta_c \cos\left(\omega t\right) + \delta_s \sin\left(\omega t\right) \qquad (17)$$

et l'effort entre deux degrés de liberté suivant une direction d qui peut être tangentielle ou normale et définie comme

$$\Omega_1^d\left(t\right) = \tau_c \cos\left(\omega t\right) + \tau_s \sin\left(\omega t\right) \qquad (18)$$

Ensuite pour chaque direction d, pour vérifier l'équation suivante :

$$\Omega_1^d\left(t\right) = k^{d,n}\delta^n\left(t\right) + c^{d,n}\dot{\delta}^n\left(t\right) \qquad (19)$$

nous pouvons définir $k^{d,n}$ et $c^{d,n}$ de la manière suivante :

$$\begin{cases} k^{d,n} = \dfrac{\delta_c \tau_c + \delta_s \tau_s}{\delta_c^2 + \delta_s^2} & c^{d,n} = \dfrac{\delta_s \tau_c - \delta_c \tau_s}{\omega \left( \delta_c^2 + \delta_s^2 \right)} & \text{si } \delta c \neq 0 \text{ ou } \delta s \neq 0 \\[3ex] k^{d,n} = 0 & c^{d,n} = 0 & \text{sinon.} \end{cases} \qquad (20)$$

En utilisant l'équation 16 dans l'équation 13 nous obtenons :

$$\mathbf{M}\Delta\ddot{\mathbf{U}}_1 + (\mathbf{C} + \mathbf{C}_1)\Delta\dot{\mathbf{U}}_1 + (\mathbf{K}_{nl,\mathbf{U}_s} + \mathbf{J}_{nl} + \mathbf{K}_1)\Delta\mathbf{U}_1 \simeq \mathbf{0} \qquad (21)$$

L'équation 21 peut facilement être réécrite dans un espace d'état de la manière suivante :

$$\dot{\mathbf{Y}}_1 = \mathbf{A}\mathbf{Y}_1 \qquad (22)$$

dans laquelle

$$\mathbf{A} = \begin{bmatrix} \mathbf{0} & \mathbf{I} \\ -\mathbf{M}^{-1}\left( \mathbf{K}_{nl,\mathbf{U}_s} + \mathbf{J}_{nl} + \mathbf{K_1} \right) & -\mathbf{M}^{-1}\left( \mathbf{C} + \mathbf{C_1} \right) \end{bmatrix} \qquad (23)$$

et

$$\mathbf{Y}_1 = \begin{pmatrix} \Delta\mathbf{U}_1 \\ \Delta\dot{\mathbf{U}}_1 \end{pmatrix} \qquad (24)$$

Y1 est le vecteur des variables d'état (déplacements et vitesses). L'équation 22 est la représentation d'état sous forme matricielle.

La matrice **A** peut être utilisée pour une analyse de stabilité qui inclut le premier harmonique de la dynamique modale, ce qui a du sens puisque le premier harmonique est directement lié au mode instable (c'est-à-dire la fréquence d'instabilité).

Nous présentons maintenant l'évaluation d'une déformée modale complexe à partir du premier harmonique de la variable de déplacement et la méthodologie MASA.

Dans ce paragraphe on poursuit l'objectif de proposer une évaluation de la déformée modale complexe en utilisant seulement le premier harmonique du déplacement. Ensuite la stratégie basée sur l'évolution de l'amplitude modale sera expliquée.

L'équation 14 pourrait être réécrite pour la valeur propre d'indice i de la manière suivante :

$$\Delta\mathbf{U}_1 = \mathbf{X}_1 \mathbf{e}^{\mathbf{j}\omega_\mathbf{i} \mathbf{t}} + \bar{\mathbf{X}}_1 \mathbf{e}^{-\mathbf{j}\omega_\mathbf{i} \mathbf{t}} \qquad (25)$$

où j est l'unité imaginaire et

$$\mathbf{X}_1 = \frac{\left( \Delta\mathbf{U}_1^\mathbf{c} - \mathbf{j}\Delta\mathbf{U}_1^\mathbf{s} \right)}{2} \qquad (26)$$

Ensuite l'équation (25) est équivalente à

$$\left\{ \begin{array}{c} \mathbf{\Delta U_1} = \mathbf{X_1}\mathbf{e}^{\lambda_i t} + \mathbf{\bar{X}_1}\mathbf{e}^{\bar{\lambda}_i t} \\ \\ \Re(\lambda_i) = 0 \end{array} \right. \tag{27}$$

Ici, nous pouvons noter que cette première solution harmonique introduit naturellement la condition de stabilité donnée par R($\lambda_i$) = 0.

Si nous avons $\Delta U_1 \neq$ de 0 ($\Delta U_1$ étant une quantité connue) pour un mode instable (c'est-à-dire avec la valeur propre $\lambda_i$) $\lambda_i$ peut être extrait directement de la matrice $A_i$ en considérant la forme suivante :

$$\lambda_i = \psi_i^T \mathbf{A_i} \psi_i \tag{28}$$

dans laquelle

$$\psi_i = \frac{1}{\eta} \begin{pmatrix} \mathbf{X_1} \\ \mathbf{j}\omega_i \mathbf{X_1} \end{pmatrix} \tag{29}$$

et

$$\eta = \left\| \begin{array}{c} \mathbf{X_1} \\ \mathbf{j}\omega_i \mathbf{X_1} \end{array} \right\| \tag{30}$$

Finalement, la stratégie globale de la méthode MASA est basée sur un balayage des amplitudes modales $p_i^m$ en prenant comme hypothèse que $\psi_i^m = \psi_i^0$ et que $\omega_i^m = \omega_i^0$ sont indépendants de l'amplitude modale. m fait référence à l'indice de balayage. Pour chaque valeur de $p_i^m$, $\mathbf{X_1^m}$ peut alors être approché en utilisant l'équation (20) de telle sorte que :

$$\begin{pmatrix} \mathbf{X_1^m} \\ \mathbf{j}\omega_i^0 \mathbf{X_1^m} \end{pmatrix} = p_i^m \psi_i^0 \tag{31}$$

Comme $\psi_i^m$ n'est pas mis à jour suivant l'amplitude modale, $\lambda_i^m$ n'est pas déduite de l'équation précédente mais extraite d'une analyse en valeurs propres complexes effectuée à partir de la matrice A (voir l'équation 23).

Pour le lecteur intéressé, il peut être noté que la linéarisation qui est proposée pour cette méthode MASA rendra possible l'utilisation d'une diminution des déplacements relatifs. Cela réduira par deux le nombre d'inconnus dans le processus d'optimisation et mènera à une réduction significative du temps de calcul nécessaire.

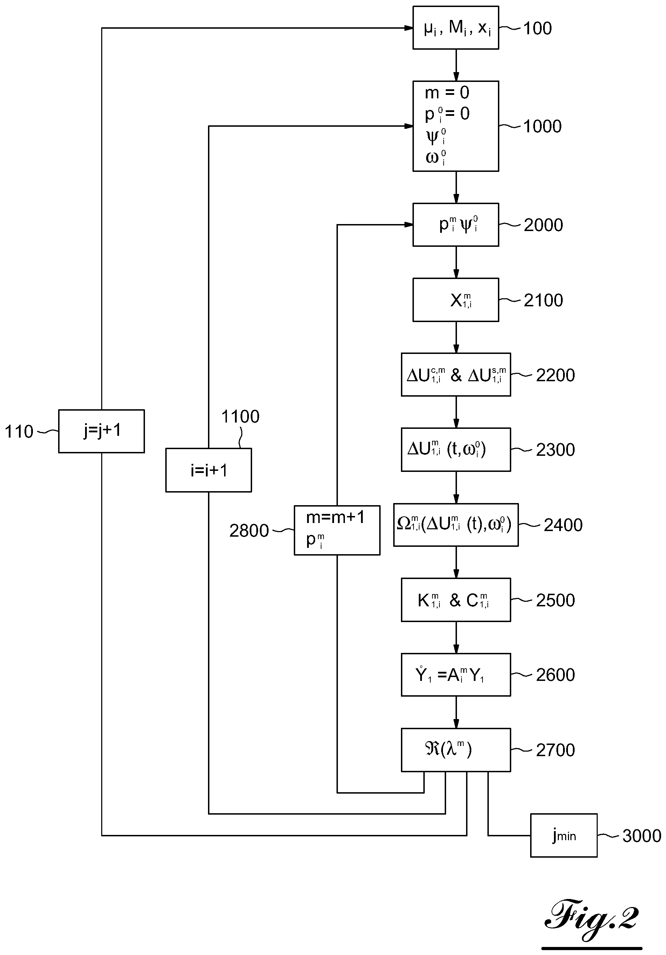

En référence à la **figure 2,** un mode de réalisation du procédé selon l'invention comprend trois boucles imbriquées.

Dans une boucle externe dont le compteur est la variable j on fixe au cours d'une étape 100 les paramètres physiques du système pour le compteur j. Les paramètres physiques du système peuvent être des valeurs de coefficient de friction $\mu$ une masse dans le système M et divers paramètres géométriques x. Le paramètre j est incrémenté au cours d'une étape 110, de manière à ce que différentes valeurs possibles d'au moins un paramètre physique soient passées en revue.

À l'intérieur de cette grande boucle se situe une boucle intermédiaire de compteur i. On effectue une analyse du système en mode propre complexe classique en un point d'équilibre statique non linéaire du système de frein, pour identifier par ordinateur les différents modes propres complexes du système de frein correspondant à des instabilités du système de frein.

Et pour une valeur donnée de i correspondant à une valeur propre complexe du système obtenue par cette analyse, on fixe la déformée modale $\Psi$ et la pulsation finale des cycles limites non linéaires w à des valeurs fixes déterminées en fonction de l'analyse de stabilité à l'équilibre statique et indépendante de la valeur d'amplitude modale p que l'on fait ensuite varier.

L'amplitude modale p prend diverses valeurs obtenues en effectuant une boucle interne de compteur m. Ces valeur sont imposées au cours d'un balayage par ordinateur.

La déformée modale $\Psi$ et la pulsation finale w sont fixées au cours d'une étape 1000 d'initialisation pour la valeur propre correspondant à la valeur de compteur i. Le compteur i est incrémenté au cours d'une étape 1100.

Au sein de la boucle intermédiaire de compteur i est effectué un balayage pour les différentes valeurs du compteur m qui permettent de faire varier l'amplitude modale p. Celle-ci est alors imposée pour les vibrations dans le mode propre.

Au cours d'une étape 2000 on calcule le produit de la déformée modale $\Psi$ (indépendante du compteur m) par l'amplitude modale p (dépendante du compteur m).

Au cours d'une étape 2100 on effectue l'évaluation du vecteur $X_1$, conformément à l'équation 31. Il s'agit là d'une approximation, basée notamment sur la considération de seulement le premier harmonique de la décomposition de Fourier par ordinateur de la variable de déplacement U.

Au cours d'une étape 2200 on calcule ensuite les cosinus et sinus de l'harmonique de rang 1 de la transformée de Fourier de la variable de déplacement (perturbation) autour du point d'équilibre statique U, à l'aide des équations 25 à 27, en utilisant la valeur de X obtenue à l'étape 2100.

Au cours d'une étape 2300 on calcule les valeurs, en fonction du temps, de l'harmonique de rang 1 de la transformée de Fourier de la valeur de déplacement $\Delta U$, en tenant compte de la pulsation finale w (indépendante du compteur m).

Ensuite, au cours d'une étape 2400 on calcule les valeurs, dans le temps, de l'harmonique de rang 1 des forces de contact non linéaires $\Omega$ sur la base de la fonction de déplacement calculée à l'étape précédente 2300, en tenant compte de la pulsation finale w (indépendante du compteur m). Le calcul est effectué par l'équation 13.

On effectue ensuite la linéarisation des forces de contact qui a été évoquée précédemment.

Au cours d'une étape 2500 on calcule les coefficients K et C correspondant à la linéarisation des forces de contact par rapport à la variable de déplacement U et à la vitesse, sur la base des équations 17 à 20.

Dans une étape 2600 on effectue une analyse en mode complexe propre du système équivalent linéarisé dans une représentation d'état, selon les équations 22 et 23.

Au cours d'une étape 2700 on retient les valeurs propres complexes obtenues à l'étape précédente et ayant une partie réelle qui est positive.

Ainsi les étapes 2600 et 2700 permettent de repérer les modes propres instables du système de frein.

À l'issue de cette observation on passe à l'itération suivante en incrémentant le compteur m au cours d'une étape 2800. Si le compteur m est arrivé à sa valeur maximale on réinitialise celui-ci à la valeur zéro et on incrémente le compteur i au cours d'une étape 1100. Si le compteur i est arrivé à sa valeur maximale on réinitialise celui-ci à la valeur zéro et on incrémente le compteur j au cours d'une étape 110.

Une fois le compteur j arrivé à sa valeur maximale, on choisit, au cours d'une étape 3000, une valeur de j, jmin, qui offre le meilleur résultat en matière d'absence de modes instables susceptibles de générer des instabilités, pour réduire le bruit de crissement du frein.

L'invention peut aussi être mise en oeuvre en étudiant les instabilités apparaissant quand un niveau d'amplitude donné est imposé sur plusieurs instabilités en même temps, avec une répartition que l'on fait varier avec un ou plusieurs compteurs.

L'invention peut aussi être mise en oeuvre en faisant varier la déformée modale en fonction de l'amplitude modale imposée.

Nous allons maintenant discuter des résultats obtenus.

Nous discutons dans ce paragraphe d'un modèle amorti réduit sur la gamme de 0-6kHz. Comme expliqué précédemment dans le travail de *Fazio et al* évoqué plus haut, des super éléments sont générés pour chaque pas du paramètre $\mu$, (de $\mu = 0,1$ à $\mu = 0,9$ par pas de $\Delta\mu = 0,1$) puisque le modèle réduit dépend de la valeur du coefficient de friction $\mu$.

L'approche numérique est définie de la manière suivante : chaque valeur du paramètre $\mu$, des instabilités de la gamme de fréquence d'intérêt, c'est-à-dire entre 0 et 6kHz, sont détectées en utilisant la méthode CEA. Ensuite pour chaque instabilité les amplitudes modales du système non linéaire sont évaluées indépendamment en utilisant la méthode MASA pour effectuer un balayage d'amplitude incrémental avec un pas $\Delta p$, pour un mode instable prédéfini. Pour une valeur donnée du paramètre $\mu$, toutes les parties réelles de valeurs propres de la matrice A (voir l'équation 23) sont calculées. Si certaines parties réelles sont supérieures à zéro, alors elles correspondent à l'augmentation de modes instables pour une amplitude modale initiale donnée.

Dans ce qui suit les résultats vont être présentés pour six instabilités dans la gamme de 0 à 6kHz comme précédemment indiqué. Tout d'abord les trois principales instabilités à 1,98kHz, 3,96kHz et 4,72kHz sont discutées en détail. Ensuite, les résultats pour les trois autres instabilités à 3,69kHz, 4,94kHz et 5,34kHz sont présentées.

Tout d'abord nous nous intéressons à l'évolution des parties réelles du système dynamique en fonction de différentes amplitudes modales initiales de la première instabilité (autour de 1,98kHz) et de différents coefficients de friction (de $\mu = 0,6$ à $\mu = 0,9$ avec un pas de 0,1). Il est observé que l'apparition et la génération de vibrations auto excitées augmentantes (c'est-à-dire évolution des parties réelles) peut être différente en fonction de l'amplitude du mode instable (c'est-à-dire l'amplitude modale) pour une valeur donnée du coefficient de friction. Plusieurs modes instables peuvent apparaitre même si les conditions initiales prennent en compte seulement les amplitudes pour le premier mode instable. Par exemple, cinq modes instables sont générés dans diverses configurations : pour $\mu = 0,7$ et une amplitude modale entre 10 et 210 (avec cinq modes instables à 2kHz, 3,85kHz, 4,7Khz, 4,9kHz et 5,4kHz) pour $\mu = 0,9$ et une amplitude modale entre 0 et 300 (avec cinq modes instables de 2kHz, 3,7kHz, 3,85kHz, 4,7kHz et 6,4kHz). Egalement des modes instables nouveaux qui n'ont pas été prédits avec l'analyse de stabilité classique pour une valeur de coefficient de friction peuvent apparaître. Par exemple dans le cas de $\mu = 0,7$, un mode instable à 5,3kHz apparait quand l'amplitude modale est comprise entre [10 et 200]. De manière similaire une instabilité à 4,9kHz apparait pour $\mu = 0,8$ et $\mu = 0,9$ alors que l'analyse de stabilité classique indique qu'il n'y a pas de mode instable autour de cette fréquence pour les coefficients de friction envisagés. Il est intéressant de noter néanmoins que les modes instables qui émergent à 4,9kHz et 5,3kHz ont été prédits par l'analyse classique mais pas pour les mêmes valeurs du coefficient de friction. Cela illustre le fait que de nouveaux modes instables peuvent apparaître en tenant compte de l'évolution de la stabilité d'une solution instable et par conséquent fournir de précieuses informations complémentaires. Nous pouvons également voir l'évolution de la fréquence des modes instables avec l'évolution de l'amplitude modale. Cela est particulièrement visible pour le mode instable autour de 4,7 à 5kHz.

Ensuite nous nous intéressons à l'évolution des parties réelles pour différents coefficients de friction, les deux instabilités à 3,85kHz et 4,72kHz étant des contributeurs initiaux pour les amplitudes modales. Une fois encore, il est observé que l'occurrence et la génération de vibrations instables dépend des amplitudes modales initiales. Des modes plus ou moins instables peuvent apparaitre du fait de l'évolution d'à la fois la valeur du coefficient de friction et des amplitudes modales. Nous pouvons aussi conclure que le choix du mode instable utilisé pour initier les amplitudes instables influence de manière importante l'apparition et l'évolution de tous les modes instables.

Pour un cas particulier, un nouveau mode instable à 5,7kHz qui n'avait jamais été prédit par l'analyse classique est visible. Cette nouvelle contribution apparait uniquement pour des amplitudes modales significatives.

Ensuite, il peut être observé que des modes instables disparaissent quand les amplitudes modales des modes instables choisis augmentent (par exemple la fréquence instable à 3,8kHz et la fréquence instable à 4,7kHz, les fréquences instables à 5,2 et 5,6kHz ainsi que la fréquence instable à 4,7kHz).

Finalement, nous notons que pour ces deux cas (instabilité à 3,85 ou 4,72 kHz en tant que contributeur initial unique respectivement), les modes instables sélectionnés pour initier le mouvement (c'est-à-dire les amplitudes modales) peuvent disparaitre et par conséquent ne plus être présents dans la contribution à la vibration auto excitée grandissante, même s'il s'agit des contributeurs initiaux générant l'instabilité. Ce fait apparait clairement et les modes instables initiaux à 3,85 et 4,72 kHz respectivement disparaissent quand l'amplitude modale augmente. Par conséquent, il est clair que le mode instable initial ne mène pas nécessairement à une contribution aux mouvements vibrationnels et il peut dans certain cas être seulement un contributeur initial d'instabilité. Egalement cela démontre les limitations de la technique classique. Nous pouvons conclure que les vibrations instables grandissantes initiales peuvent être plus ou moins complexes, avec la contribution de modes plus ou moins instables, du fait du choix des amplitudes modales d'un mode instable. La contribution de modes instables peut apparaitre ou disparaitre pendant des vibrations auto entretenues grandissantes. Néanmoins, il peut être noté que le nombre de modes instables qui émergent est limité au vu des conditions initiales imposées. Egalement, nous trouvons des similarités en termes de fréquence et de parties réelles entre les différentes configurations.

La méthodologie MASA permet également d'estimer la réponse stationnaire non linéaire sous des modes instables prédéfinis dans des configurations spécifiques. Par exemple, une réponse stationnaire est obtenue pour $\mu = 0,2$ et deux amplitudes modales spécifiques, pour p = 100 et p = 440. Cela illustre le fait qu'il peut y avoir des cycles limites multiples pour une valeur donnée de coefficient de friction. Comme précédemment expliqué l'objectif principal de la méthodologie MASA est l'estimation de l'émergence des modes instables, c'est-à-dire l'apparition et la génération de vibrations auto excitées grandissantes sous contrainte de l'amplitude prédéfinie d'un mode instable; et non pas d'estimer les amplitudes de cycle limite. Un avantage de la méthodologie MASA est de donner une première indication de la propension au crissement en fonction de l'amplitude initiale sectionnée par l'analyse de stabilité classique. La méthodologie MASA peut être considérée comme un compromis entre l'analyse de stabilité par analyse des valeurs propres complexes et la méthode GCHBM (méthode d'équilibre harmonique contraint généralisé, voir Coudeyras et al, Journal of sound and vibration, 328-4 :520, 2009, ainsi que Coudeyras et al, Journal of sound and vibration, 319-3 :

1175, 2009) qui permet de calculer une solution périodique et quasi-périodique pour des instabilités multiples présentes dans le crissement de frein.

Finalement, on s'intéresse aux trois instabilités à 3,69, 4,94 et 5,34kHz. Pour chacun de ces cas, les remarques précédentes ont toujours de la valeur. Les contributions de plusieurs modes instables sont présentes. Ces contributions peuvent être plus ou moins importantes en fonction des changements en amplitude modale du mode instable prédéfini. Dans tous les cas, le mode instable avec la plus grande partie réelle est toujours le même. Nous pouvons voir cette instabilité à 4,72kHz pour les amplitudes modales faibles, et à 4,9kHz quand on augmente les amplitudes modales d'un mode instable prédéfini. Cette information intéressante qui n'est pas disponible par la méthode conventionnelle nous permet de savoir quels sont les modes instables qui gouvernent des vibrations initiales grandissantes.

Il est affirmé ici que les temps de calcul sont remarquables.

Il convient d'insister sur les intérêts considérables de l'invention. L'invention se distingue avantageusement de l'analyse de stabilité standard qui est utilisée dans certains milieux industriels.

Elle donne plus d'informations sur les instabilités potentielles du modèle de frein étudié.

L'invention n'est pas sujette aux problèmes de convergence que l'on peut rencontrer avec des algorithmes d'optimisation ou des schémas d'intégration temporels.

Les temps de calcul sont compatibles avec une utilisation industrielle. Par exemple pour un modèle donné défini par neuf super-éléments et pour lequel on évalue trente instabilités, le temps de génération des supers éléments est de 1h52, le temps d'évaluation complet avec un pas de coefficient de friction menant à 100 étapes de calcul et de 5h24. Ces valeurs sont fournies pour un modèle comprenant 104 éléments de contact.

Les calculs ont également été menés avec un modèle comprenant 212 éléments de contact, et pour lequel 9 super-éléments ont été générés et pour lequel 28 instabilités ont été étudiées. Le temps de calcul pour l'évaluation complète avec la méthode présentée était de 29h07.

L'ordinateur utilisé est un ordinateur de bureau. Le logiciel a été compilé à l'aide de Matlab (marque déposée).

Au-delà des systèmes de freinage, la méthodologie peut être mise en oeuvre sur le système d'embrayage et des trains complets, par exemple. Les systèmes étudiés peuvent relevés du domaine automobile, ferroviaire ou aéronautique par exemple.

Finalement nous proposons de montrer l'évolution des contacts aux interfaces de friction. Par exemple pour le coefficient de friction spécifique $\mu$ = 0,7, le statut de chaque élément de contact en fonction de l'amplitude modale p de l'une des trois instabilités principales à 1,98, 3,85 et 4,7 kHz, est défini par trois valeurs possibles du statut de contact à l'interface de friction : absence de contact, contact permanent et impact.

Quand l'amplitude modale p augmente, on constate l'émergence d'impacts pour chaque configuration. En comparant l'évolution de la partie réelle vis-à-vis de l'amplitude modale p, et l'évolution du statut de contact, les apparitions des impacts évoluent dans la direction d'une stabilisation par la baisse de l'évolution de la partie réelle ou dans la direction de la déstabilisation par l'augmentation de la partie réelle.

Dans certains cas il est important de noter que des micros impacts sont suffisants pour stabiliser la réponse modale, quand la partie réelle s'approche de zéro. Ainsi l'amplitude vibrationnelle du système de frein peut être approximée en utilisant la méthodologie MASA. Par exemple, nous considérons la configuration avec l'amplitude modale p du deuxième mode instable à 3,8kHz pour $\mu$ = 0,2. Comme précédemment évoqué, les réponses stationnaires sont obtenues pour deux amplitudes globales spécifiques, pour p = 100 et p = 440. Ces deux amplitudes modales correspondent à deux statuts de contact différents à l'interface de friction. Tous ces résultats montrent que le statut local à l'interface de friction entre la plaquette et le disque peut jouer un rôle important sur la génération des vibrations auto entretenues qui sont estimées à partir d'une amplitude prédéfinie d'un mode instable. Pour la solution stabilisée, les amplitudes vibratoires auto-entretenues sont également impactées par le statut local à l'interface de contact.

Nous avons donc proposé une nouvelle méthode appelée MASA qui est basée sur la transformation d'une approximation du premier harmonique des équations du mouvement (en utilisant la méthode de balance harmonique) vers une représentation d'état compatible avec une analyse de stabilité.

Par cette approche et par l'évolution des parties réelles du système dynamique en fonction des amplitudes modales, l'occurrence et la génération de vibrations auto excitées sont détectées. Pour la stratégie globale une linéarisation d'un nouveau type est proposée pour les forces non linéaires à l'interface de friction de manière à linéariser chaque élément de contact indépendamment. Cette linéarisation introduit des termes à la fois dans les matrices de rigidité et d'amortissement et permet d'utiliser une réduction sur les déplacements relatifs. Pour repérer des modes propres complexes instables du système de frein dans un espace d'état, on peut aussi faire varier la déformée de l'harmonique de rang 1 et la pulsation finale des cycles limites non linéaires en fonction de de l'amplitude modale considérée en se basant sur la méthode d'équilibre harmonique contraint généralisé.

L'application à un système de frein d'automobile sous forme d'éléments finis a été présentée.

Sur la base des résultats numériques et en relation avec l'approche scientifique proposée, la méthode MASA est manifestement très intéressante dans différents aspects. Tout d'abord il n'y a pas de problème de convergence puisqu'il n'y a pas d'optimisation, ensuite les temps de calcul sont tout à fait raisonnables.

**Revendications**

1. Procédé d'optimisation d'un système de frein pour réduire le bruit de crissement, comprenant au moins les étapes de

   - passer en revue (100, 110) des valeurs possibles d'au moins un paramètre physique du système
   - pour chaque valeur du paramètre passée en revue et pour un point prédéterminé d'équilibre statique non linéaire du système de frein, rechercher et identifier par ordinateur (1000, 1100) les différents modes propres du système de frein correspondant à des instabilités du système de frein,
   - pour chaque mode propre identifié, imposer au cours d'un balayage par ordinateur différentes amplitudes vibratoires pour les vibrations dans ledit mode (2000, 2800), et pour chaque amplitude imposée au cours du balayage, effectuer par ordinateur une décomposition du système de frein en harmoniques (2100-2400) en ayant linéarisé (2500) les forces de contact vis-à-vis du déplacement et de la vitesse pour repérer (2600, 2700) des modes propres instables du système de frein,
   - choisir (3000) une des valeurs du paramètre physique ainsi passées en revue en fonction des modes propres instables ainsi repérés pour réduire le bruit de crissement du système de frein.

2. Procédé selon la revendication 1, dans lequel le paramètre physique est la valeur d'une masse d'une pièce du système (M) ou la présence de ladite pièce, ou tout ou partie de la géométrie de l'interface de frottement (x), ou encore un coefficient de frottement ($\mu$).

3. Procédé selon la revendication 1 ou la revendication 2, dans lequel le système est modélisé en éléments finis, et les forces de contact sont linéarisées indépendamment pour chaque élément de contact.

4. Procédé selon l'une des revendications 1 à 3, dans lequel on calcule par ordinateur (1000, 1100) les valeurs propres complexes des différents modes propres complexes du système de frein correspondant à des instabilités du système de frein sur un modèle linéarisé du système de frein dans lequel chaque élément de contact est linéarisé indépendamment.

5. Procédé selon l'une des revendications 1 à 4, dans lequel l'analyse harmonique est l'analyse harmonique de Fourier.

6. Procédé selon l'une des revendications 1 à 5, dans lequel pour repérer (2600, 2700) des modes propres instables du système de frein, on approche (2100) le système par son harmonique de rang 1.

7. Procédé selon l'une des revendications 1 à 6, dans lequel pour repérer (2600, 2700) des modes propres complexes instables du système de frein dans un espace d'état, on prend pour hypothèse que la déformée de l'harmonique de rang 1 et la pulsation finale des cycles limites non linéaires sont indépendants (2000) de l'amplitude modale considérée.

8. Procédé selon l'une des revendications 1 à 6, dans lequel pour repérer (2600, 2700) des modes propres complexes instables du système de frein dans un espace d'état, on fait varier la déformée de l'harmonique de rang 1 et la pulsation finale des cycles limites non linéaires en fonction de de l'amplitude modale considérée.

**Patentansprüche**

1. Ein Verfahren zum Optimieren eines Bremssystems zum Reduzieren von Quietschgeräuschen, umfassend mindestens die Schritte von

   - Überprüfung (100, 110) möglicher Werte mindestens eines physikalischen Parameters des Systems
   - für jeden Wert der Parameter überprüft und für ein vorbestimmter punkt nichtlineare statische Gleichgewicht des Bremssystems, suchen und Computer identifizieren (1000, 1100), um die verschiedenen Betriebsarten des Bremssystems zu Instabilitäten des Bremssystems entspricht,
   - für jeden Eigenmodus identified, aufzuzwingen während einer Computerscan unterschiedliche Schwingungsamplituden für die Schwingungen in der genannten Betriebsart (2000, 2800), und jede Amplitude für auferlegte während des Scannens, führen durch den Computer eine Zerlegung des Systems Brems Harmonischen (2100-2400) mit linearis ed (2500) Kräfte Kontaktschraube Schneckenverschiebung und der Geschwindigkeit für die Identifizierung (2600, 2700) des Eigenmodi instabilen Bremssystem,
   - Auswählen (3000) einer der Werte von physikalischen und überprüfte nach den instabilen Eigenmoden und identifiziert, um den quietschenden Geräusche zu reduzieren von Bremsanlage.

2. Verfahren nach Anspruch 1, bei dem der physikalische Parameter der Wert einer Masse eines Teils des Systems (M) oder das Vorhandensein dieses Teils oder der gesamten oder eines Teils der Geometrie der Reibungsgrenzfläche (x) oder ist Reibungskoeffizient ($\mu$).

3. Verfahren nach Anspruch 1 oder Anspruch 2, wobei das System ein Finite-Elemente-Modell ist und die Kontaktkräfte für jedes Kontaktelement unabhängig linearisiert werden.

4. Verfahren nach einem der Ansprüche 1 bis 3, bei dem die komplexen Eigenwerte der verschiedenen komplexen Eigenmodi des Bremssystems, die Instabilitäten des Bremssystems auf einem linearisierten Modell des Bremssystems entsprechen, durch Computer berechnet werden (1000, 1100) Bremssystem, bei dem jedes Kontaktelement unabhängig linearisiert.

5. Verfahren nach einem der Ansprüche 1 bis 4, bei dem die harmonische Analyse die harmonische Fourier-Analyse ist.

6. Verfahren nach einem der Ansprüche 1 bis 5, wobei erkennen (2600, 2700) instabil Eigenmodi des Bremssystemes, ein Ansatz (2100), um das System durch seinen harmonischen einen.

7. Verfahren nach einem der Ansprüche 1 bis 6, wobei zum Identifizieren (2600, 2700) instabiler komplexer Eigenmoden des Bremssystems in einem Zustandsraum angenommen wird, dass die Verformung der Harmonischen von Rang 1 und die endgültige Pulsation von Die nichtlinearen Grenzzyklen sind unabhängig (2000) von der betrachteten Modalamplitude.

8. Verfahren nach einem der Ansprüche 1 bis 6, wobei zum Identifizieren (2600, 2700) instabiler komplexer Eigenmoden des Bremssystems in einem Zustandsraum die Verformung der Harmonischen der Ordnung 1 variiert wird und die endgültige Pulsation des Nichtlinearen Grenzzyklen in Abhängigkeit von der betrachteten Modalamplitude.

## Claims

1. A method of optimizing a brake system to reduce squealing noise, comprising at least the steps of

   - reviewing (100, 110) possible values of at least one physical parameter of the system
   - for each value of parameter reviewed and for a point predetermined nonlinear static equilibrium of the brake system, search for and identify computer (1000, 1100) the various modes of the brake system corresponding to instabilities the brake system,
   - for each identified eigen mode, impose during a computer scan different vibratory amplitudes for the vibrations in said mode (2000, 2800), and for each amplitude imposed during the scan, perform a computer decomposition of the brake system in harmonics (2100-2400) by having linearized (2500) the contact forces with respect to displacement and speed to identify (2600, 2700) unstable eigen modes of the brake system,
   - selecting (3000) one of the values of physical and reviewed according to the unstable natural modes and identified to reduce the squealing noise of the brake system.

2. Method according to claim 1, in which the physical parameter is the value of a mass of a part of the system (M) or the presence of said part, or all or part of the geometry of the friction interface (x), or a coefficient of friction ($\mu$).

3. A method according to claim 1 or claim 2, wherein the system is finite element model, and the contact forces are linearized independently for each contact element.

4. Method according to one of claims 1 to 3, in which the complex eigenvalues of the various complex eigenmodes of the brake system corresponding to instabilities of the brake system on a linearized model of the brake system are calculated by computer (1000, 1100) brake system in which each contact element is linearized independently.

5. Method according to one of claims 1 to 4, in which the harmonic analysis is the harmonic Fourier analysis.

6. Method according to one of claims 1 to 5, wherein to detect (2600, 2700) unstable eigenmodes of the brake system, one approach (2100) the system by its harmonic one.

7. Method according to one of claims 1 to 6, wherein to identify (2600, 2700) unstable complex eigen modes of the brake system in a state space, it is assumed that the deformation of the harmonic of rank 1 and the final pulsation of the nonlinear limit cycles are independent (2000) of the modal amplitude considered.

8. Method according to one of claims 1 to 6, wherein to identify (2600, 2700) unstable complex eigen modes of the brake system in a state space, the deformation of the order 1 harmonic is varied and the final pulsation of the nonlinear limit cycles as a function of the modal amplitude considered.

# *Fig.1*

$\mu_i$, $M_i$, $x_i$ ~100

$m = 0$
$p_i^0 = 0$
$\psi_i^0$
$\omega_i^0$ ~1000

$p_i^m$ $\psi_i^0$ ~2000

$X_{1,i}^m$ ~2100

$\Delta U_{1,i}^{c,m}$ & $\Delta U_{1,i}^{s,m}$ ~2200

$\Delta U_{1,i}^m(t,\omega_i^0)$ ~2300

$\Omega_{1,i}^m(\Delta U_{1,i}^m(t),\omega_i^0)$ ~2400

$K_{1,i}^m$ & $C_{1,i}^m$ ~2500

$\mathring{Y}_1 = A_i^m Y_1$ ~2600

$\Re(\lambda^m)$ ~2700

110~ $j = j+1$

1100
$i = i+1$

2800~ $m = m+1$
$p_i^m$

$j_{min}$ ~3000

*Fig.2*

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2942035 B1

**Littérature non-brevet citée dans la description**

- Reduction strategy for a brake system with local frictional non-linearities - Application for the prediction of unstable vibration modes. Applied Acoustics. EL-SEVIER Ltd, 13 Décembre 2014, vol. 91, 12-24
- **FAZIO et al.** *Applied Acoustics,* 15 Avril 2015, vol. 91, 12-24
- **COUDEYRAS et al.** *Journal of Sound and Vibration,* 2009, vol. 328 (4-5), 520-540
- **COUDEYRAS et al.** *Journal of sound and vibration,* 2009, vol. 328-4, 520
- **COUDEYRAS et al.** *Journal of sound and vibration,* 2009, vol. 319-3, 1175